# EUROPÄISCHE PATENTANMELDUNG

(11) **EP 2 878 437 A1**
(43) Veröffentlichungstag der Anmeldung: **03.06.2015**
(21) Anmeldenummer: 14400049.4
(22) Anmeldetag: 13.11.2014
(51) Int. Cl.: B30B 15/06, B29D 30/06

(54) **Verfahren und Herstellung einer Heizplatte für eine Reifenpresse**

(30) Priorität: 02.12.2013 DE 102013020370; 30.04.2014 DE 102014006482
(71) Anmelder: Harburg-Freudenberger Maschinenbau GmbH, 21079 Hamburg (DE)
(72) Erfinder: Wojciech, Margiciok, 22145 Hamburg (DE); Ruediger, Meincke, 22547 Hamburg (DE); Neven, Svalina, 31551 Bistrinci / Belisce (HR)
(74) Vertreter: Patentanwälte Klickow & Partner Partnerschaftsgesellschaft mbB

(57) **Zusammenfassung**

Die Erfindung betrifft eine Heizplatte zur Beheizung einer Form für eine Reifenheizpresse aufweisend, wenigstens ein erstes Heizplattenelement (10) und wenigstens ein zweites Heizplattenelement (20) sowie wenigstens einen Kanal (2) zur Durchströmung eines Heizmediums, wobei der Kanal durch wenigstens einen geöffneten Hohlraum (2') des ersten Heizplattenelementes (10) gebildet ist, der durch wenigstens ein zweites Heizplattenelement (20) axial verschlossen ist.

## Beschreibung

Die Erfindung betrifft eine Heizplatte zur Beheizung einer Form für eine Reifenheizpresse, aufweisend wenigstens ein erstes Heizplattenelement und wenigstens ein zweites Heizplattenelement, sowie wenigstens einen Kanal zur Durchströmung eines Heizmediums.

Es ist bekannt, Formen für eine Reifenheizpresse im Rahmen einer Vorheizungsvorrichtung oder in der Reifenheizpresse vor- bzw. zu beheizen. Üblicherweise werden zur Realisierung des Wärmeenergieeintrages in die Vorheizvorrichtung oder Reifenheizpresse eine oder mehrere Heizplatten verwendet, die über Hohlräume in ihrem Innern verfügen und mit einem Heizmedium beaufschlagbar sind.

Da Reifenheizpressen häufig in einem betrieblichen Umfeld eingesetzt werden, in dem diverse Wärmeverbraucher über ein zentrales Kesselhaus mit Wärmeenergie in Form von druckbeaufschlagtem Heißdampf versorgt werden, sind die Heizplatten ebenfalls mit diesem Heizmedium beheizt. Die Heizplatten müssen also über Kanäle, Hohlräume oder ähnliches verfügen, die geeignet sind, unter den herrschenden Druck- und Temperaturbedingungen dicht zu sein. Nicht zuletzt durch die herrschenden Druckverhältnisse in einem Bereich von 10 bis 21 bar (nachtragen) ist eine Abnahmeprüfung vor Ingebrauchnahme vorgeschrieben.

Zum Beheizen sind Heizplatten bekannt, in denen Kanäle gebildet sind, die neben der Verwendung von Heißdampf als Heizmedium auch Druckwasser oder Thermoöl einsetzen. Hierzu existieren aus Stahl- oder Aluminium-Vierkantrohren zusammengeschweißte Mäanderplatten, die mit zusätzlichen Deckplatten verklebt, verschweißt oder verschraubt sind. Weiter sind aus Stahl zusammengeschweißte Mäanderplatten bekannt, bei denen auf eine Stahlplatte senkrechte Stege aufgeschweißt sind, die durch ein zusätzlich aufgeschweißtes Deckblech abgedeckt werden.

Ferner wurden Sandwichheizplatten vorgeschlagen, die aus Stahlblech- und Stahlprofileinzelteilen durch Verschweißen hergestellt sind. Hierbei werden Heizplatten aus je zwei Stahlscheiben hergestellt, die durch entsprechend zwischengeschweißte Konturelemente zum Sandwich und damit zum (Dampf-) Druckbehälter geformt wurden. Die Vielzahl der Schweißnähte führten teils zu Leckagen, die erst beim Abdrücken mit Wasser im Rahmen einer drucktechnischen Überprüfung festgestellt wurden und eine Nacharbeit erforderlich machen.

Schließlich sind auch Mäanderplatten aus Aluminium bekannt, die aus massiven Aluminiumplatten bestehen, in welche ein Rohrhalbquerschnitt eingefräst ist, in den dann Kupferrohre eingebettet sind.

Die DE 202007006464 U1 stellt eine Heizplatte vor, in die zumindest im Wesentlichen in einer Ebene liegend nebeneinander angeordnete Kanäle vorgesehen sind, die einen Einlass für das Heizmedium mit einem Auslass für das Heizmedium verbinden, wobei zumindest Abschnitte zweier benachbarter Kanäle in einem einstückigen Metallprofilelement verlaufen, in welches die Abschnitte der Kanäle durch Umformung eingebracht sind. Basis des Heizplattenaufbaus sind einstückige Metallprofilelemente, in welche die Abschnitte der Kanäle durch Umformung eingebracht sind.

Auch sind tieflochgebohrte massive Stahl- oder Aluminiumheizplatten bekannt, die durch Längs- und Querbohrungen in radialer Heizplattenrichtung hergestellt werden. Neben den extrem hohen Kosten für die Herstellung weisen diese den Nachteil auf, dass aufgrund der runden Tieflochbohrungen für das Heizmedium nur vergleichsweise kleine Wärmetauscherflächen zur Verfügung stehen. Darüber hinaus müssen die Tieflochbohrungen an ihren Enden zu Mäandern verschweißt werden, was den Druckverlust erhöht und den Transport der fließenden Medien behindert.

Aufgabe der vorliegenden Erfindung ist es, eine Heizplatte der eingangs genannten Art bereitzustellen, welche eine einfachere Herstellung unterstützt, eine hohe Zuverlässigkeit hinsichtlich der Dichtheit der Heizplattenhohlräume für das Heizmedium gewährleistet und Nacharbeiten an der Heizplatte nach dessen Herstellung reduziert:

Diese Aufgabe wird erfindungsgemäß dadurch gelöst, dass in ein erstes Heizplattenelement in axialer Richtung offene Hohlräume eingebracht werden, die durch wenigstens ein zweites Heizplattenelement geschlossen werden, sodass wenigstens ein geschlossener Kanal mit Zu- und Ablauf für das Heizmedium innerhalb der Heizplatte geschaffen wird.

Die erfindungsgemäße Lehre erkennt, dass die in ein erstes Heizplattenelement in axialer Richtung eingebrachten einseitig offenen Hohlräumen erhebliche Vorteile bieten. Es können aufgrund der geringen axialen Hohlraumtiefe kostengünstige und effiziente Verfahren für die Hohlraumerzeugung Anwendung finden. Geeignet sind insbesondere das Ausbrennen, dass Wasserstrahlfräsen oder konventionelle Fräsverfahren mittels spanend arbeitender Fräswerkzeuge.

Ein weiterer Vorteil bietet sich durch die einfache Möglichkeit, Einfluss auf die Hohlraumformen und damit die Ausprägung der Kanäle für das Heizmedium innerhalb der Heizpresse zu nehmen. Es sind praktisch beliebige Kanalverläufe realisierbar, die den Wärmeübergang von dem Heizmedium auf den Heizplattenwerkstoff unterstützen dadurch, dass die Kontaktfläche des Heizmediums zur Heizplatte maximal realisiert werden kann.

Ebenfalls äußerst vorteilhaft ist der sehr große Freiheitsgrad bei der örtlichen Lage der Hohlräume innerhalb der Heizplatte, wie er sich durch die axiale Hohlraumbildung eröffnet. Die Lage und Positionierung der Hohlräume in der Heizplatte kann praktisch beliebig erfolgen, sodass je nach Anforderung eine gleichmäßige oder eine lokal unterschiedliche Heizplattenerwärmung unterstützt ist.

Es ist durch die erfindungsgemäße Lehre der Hohlraumerzeugung aus einer axialen Richtung des ersten Heizplattenelementes gesehen möglich, sehr effizient die Kanalausprägung auch durch komplizierte Kanalführungen zu realisieren. Es können aus Sicht des Heizmediums Labyrinthanordnungen geschaffen werden, die eine besonders intensive Wärmeübertragung von dem Heizmedium auf die Heizplatte ermöglichen. Problemlos und kostengünstig herstellbar sind gleichfalls beliebige Mäander-Kanalverläufe oder beliebige Stege, Prallbleche oder Querschnittsverengungen bzw. Querschnittserweiterungen um auf diese Weise dem Heizmedium eine turbulente Strömung einzuprägen und dadurch den Wärmeübergang von dem Heizmedium auf die Heizplatte nochmals zu verbessern.

Infolge der praktisch beliebigen Hohlraumgestaltung durch die aus einer axialen Richtung in das erste Heizplattenelement bewerkstelligten Materialwegnahmen können mäanderförmige Kanalführungen nicht nur in einer linearen Mäanderausrichtung sondern auch entlang eines Kreisbogens realisiert werden. Dadurch kann in die dann vorzugsweise runde Heizplatte ein Kanalquerschnittsverlauf erzeugt werden, der sich zum äußeren Rand der Heizplatte aufweitet bzw. zum Heizplattenmittelpunkt hin verkleinert.

Aufgrund der in Kanalbereichen mit kleinerem Querschnitt resultierenden höheren Strömungsgeschwindigkeit des Heizmediums wird die Wärmeübertragung auf den Heizplattenwerkstoff verringert. Gegenteilig ist die Situation in Bereichen mit größerem Kanalquerschnitt, bei dem die Strömungsgeschwindigkeit verringert ist und die Wärmeübertragung verbessert ist. Da die größeren Kanalquerschnitte infolge der kreisbogenförmigen Mäandererstreckung im Außenbereich der Heizplatte liegen, können die dortigen höheren Wärmeverluste infolge Konvektion wenigstens teilweise ausgeglichen werden. Auf diese Weise ist eine homogenere Wärmeverteilung in der Heizplatte realisierbar.

Auch durch die Form der Stege als kanalbegrenzende Elemente kann durch die Hohlraumerzeugung aus einer axialen Richtung des ersten Heizplattenelementes Einfluss genommen werden auf die Kanalquerschnitte. Die Stege können insbesondere keilförmig ausgebildet sein und dadurch die Aufweitung bzw. Zuschnürung eines Kanals und dessen Querschnittes in stetiger oder auch unstetiger Weise beeinflussen. Werden die keilförmigen Stege derart vorgesehen, dass deren Keilspitzen in Richtung des Heizplattenzentrums weisen und die breiteren Keilfüße folglich im Heizplattenrandbereich angeordnet sind kann die sich aus der Materialanhäufung und der damit einhergehenden höheren Wärmespeicherkapazität dem im Randbereich vorliegenden erhöhten Wärmeverlust ebenfalls entgegengewirkt werden.

Die axial eingebrachten Hohlräume werden durch wenigstens ein zweites plattenförmiges Heizplattenelement geschlossen, so dass ein innerhalb der Heizplatte angeordnetes, geschlossenes Kanalsystem mit einem Zulauf und einem Ablauf für das Heizmedium geschaffen wird. Als geeignete Fügeverfahren stehen das Schweißen oder das Kleben zur Verfügung.

Die zuvor beschriebene Bildung von geschlossenen Kanälen setzt voraus, dass die kanalbildenden Elemente, insbesondere die Stege in ihrer axialen Höhe derart ausgebildet sind, dass sie an dem zweiten Heizplattenelement anliegen. Das bedeutet, dass zwischen den Stegen und dem zweiten Heizplattenelement kein Luftspalt vorhanden. Die erfindungsgemäße Lehre sieht in einer Ausführungsvariante vor, dass jeweils ein Luftspalt zwischen den Stegen und dem zweiten Heizplattenelement gebildet sein kann. Dadurch ist es dem Heizmedium möglich, zwischen den Stegen und dem zweiten Heizplattenelement zu strömen, wobei der Strömungsquerschnitt an dieser Stelle infolge der Dicke des Luftspaltes üblicherweise kleiner als der Strömungsquerschnitt der Kanäle ist.

In diesem Fall werden die Kanäle nicht durch die Stege oder vergleichbare Bleche begrenzt, sondern nur durch die Rippen des ersten Heizplattenelementes. Die Stege funktionieren dann praktisch wie ein Strömungshindernis ähnlich einem Prallblech und beeinflussen sowohl die Ausprägung der Strömung des Heizmediums als auch die Strömungsgeschwindigkeit bereichsweise. In einer bevorzugten Ausführungsform beträgt die Höhe des Luftspaltes 5 bis 30% der Höhe des Steges.

Weiterhin ist es möglich, alternativ oder additiv Stege an dem zweiten Heizplattenelement vorzusehen, die in an dem ersten Heizplattenelement festgelegten Zustand in die Hohlräume hineinragen und derart zu dimensionieren, dass zwischen diesen Stegen und dem ersten Heizplattenelement ein Luftspalt gebildet ist. Bei der Kombination von Stegen festgelegt an dem ersten Heizplattenelement und an dem zweiten Heizplattenelement ist es möglich, deren Anordnung beliebig zu wählen. Die Stege können zonenweise, d.h. Stege jeweils zwischen den Rippen, wechselseitig oder gleichseitig festgelegt sein. Eine andere günstige Anordnung kann die Alternierende sein, d.h. über alle Heizlattenzonen jeweils im Wechsel an dem ersten und an dem zweiten Heizplattenelement festgelegt. Dadurch wird je nach Lage des Luftspaltes die Strömungskontaktfläche entweder des ersten oder des zweiten Heizplattenelementes vergrößert.

Mit dieser Steggestaltung, die einen, mehrere oder alle Stege einer erfindungsgemäßen Heizplatte umfassen kann, ist eine weitere Möglichkeit eröffnet, durch die Einstellung der lokalen Strömungsgeschwindigkeiten und Volumenströme des Heizmediums innerhalb der Heizplatte auf den Wärmeübergang vom Heizmedium auf die Heizplatte Einfluss zu nehmen und dadurch die Heizplattentemperatur insbesondere zonenweise einzustellen.

Es ist durch die erfindungsgemäße Lehre der Hohlraumerzeugung aus einer axialen Richtung der Heizplatte gesehen möglich, die Anzahl und die Größe der Fügeflächen erheblich zu minimieren. Dies führt dazu, dass beispielsweise die erforderliche Anzahl von Schweißnähten deutlich reduziert wird und damit das Risiko undichter Schweißnahtverbindungen ebenfalls minimiert wird. Somit unterstützt die erfindungsgemäße Lehre nicht nur die Optimierung der Kanalführung für das Heizmedium innerhalb der Heizplatte, sondern reduziert in erheblichem Umfang die Notwendigkeit, die Fügeflächen durch Schweißnähte oder alternativen Klebeverfahren zu verschließen. Jede der genannten Vorteile ist außerdem geeignet die Kostensituation der Heizplatte zu verbessern.

In den Zeichnungen sind Ausführungsbeispiele der Erfindung schematisch dargestellt. Es zeigen:
- Figur 1: Eine Draufansicht und verschiedene Schnittdarstellungen einer Heizplatte (1') gemäß dem Stand der Technik,
- Figur 2: eine Darstellung der erfindungsgemäßen Heizplatte (1) in drei Ansichten und Schnittdarstellungen,
- Figur 3: eine Darstellung der erfindungsgemäßen Heizplatte (1) in einer Ausführungsvariante mit heizflächenseitigen Führungen (4) in drei Ansichten und Schnittdarstellungen,
- Figur 4: eine Darstellung des erfindungsgemäßen ersten Heizelementes (10) in drei Ansichten und Schnittdarstellungen sowie einer dreidimensionalen Abbildung,
- Figur 5: eine Darstellung des erfindungsgemäßen zweiten Heizelementes (20) in zwei Ansichten,
- Figur 6: in der linken Abbildung die qualitative Darstellung der Strömungsgeschwindigkeiten des Heizmediums (6) innerhalb der Kanäle (2) und den Luftspalten (5) in der rechten Abbildung die dreidimensionale Darstellung von erstem Heizelement (10) und zweitem Heizelement (20) und
- Figur 7: eine perspektivische, qualitative Darstellung der Strömungsgeschwindigkeiten des Heizmediums (6) innerhalb der Kanäle (2) und den Luftspalten (5) des ersten Heizelementes (10) und des zweiten Heizelementes (20) mit Stegen (11) in alternierender und nichtalternierender Anordnung.

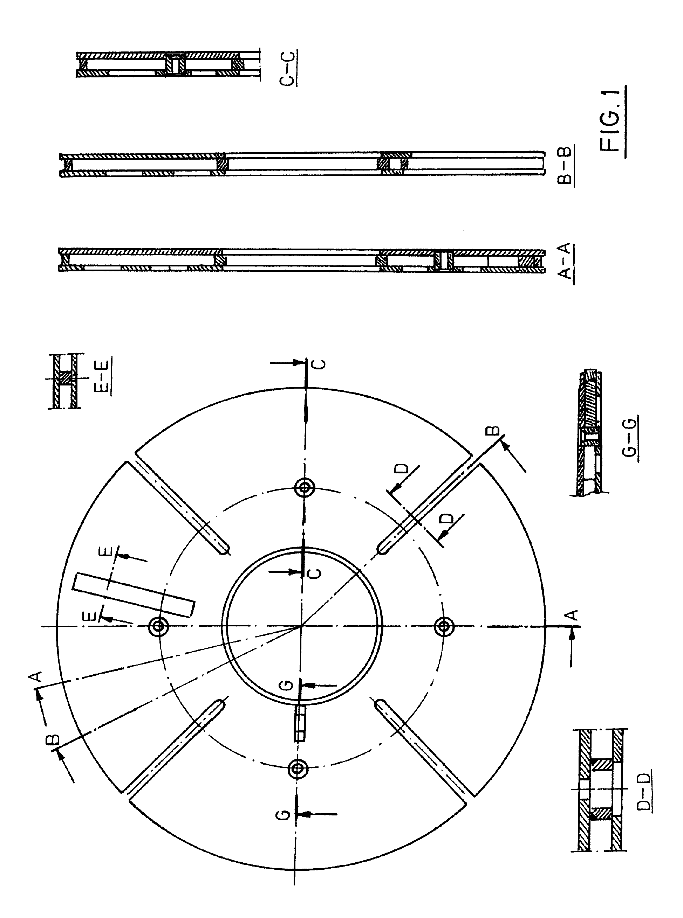

Figur 1 zeigt eine Draufansicht und verschiedene Schnittdarstellungen einer Heizplatte (1') gemäß dem Stand der Technik. Diese Heizplatten (1') werden üblicherweise aus je zwei Stahlscheiben, d.h. Flachstähle mit erheblicher räumlicher Ausdehnung in zwei Raumrichtungen und einer geringeren, die Wandstärke bildenden dritten Raumrichtung hergestellt. Durch zwischen den Stahlscheiben angeordneten und verschweißten Konturelementen wird eine Sandwichbauweise realisiert, die einen Druckbehälter darstellt und Hohlräume bzw. Kanäle aufweist.

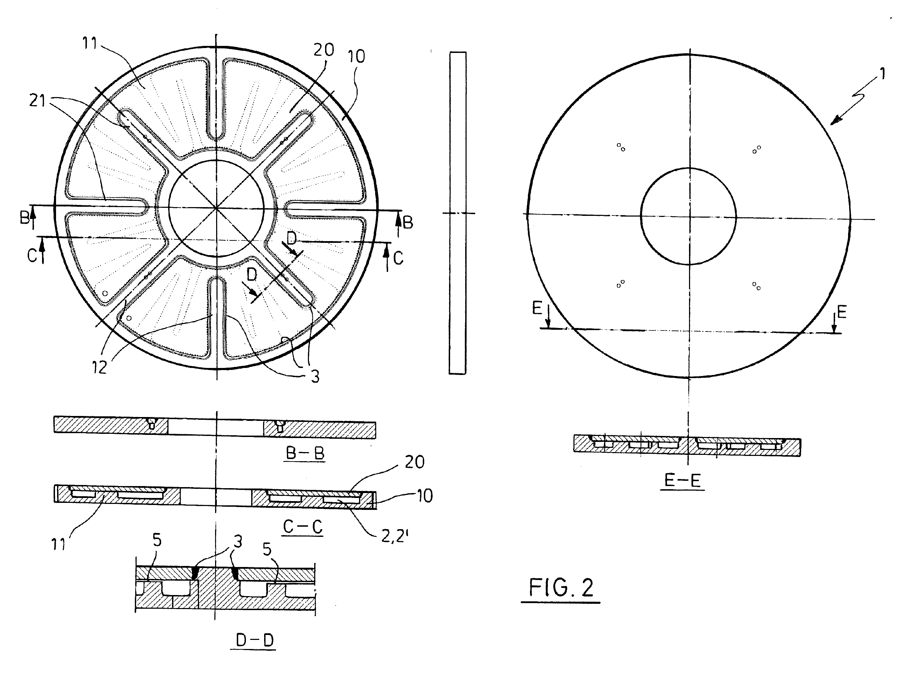

Figur 2 zeigt eine Darstellung der erfindungsgemäßen Heizplatte (1) in drei Ansichten und Schnittdarstellungen. Die Heizplatte (1) wird im Wesentlichen gebildet durch ein erstes Heizplattenelement (10) und einem zweiten Heizplattenelement (20). In den ersten Heizplattenelement (10) sind Hohlräume bzw. Kanäle (2) eingearbeitet, die von einem oder mehreren Stegen (11) in ihrer Kanalführung beeinflusst sind. Weiterhin sind in dem ersten Heizplattenelement (10) eine oder mehrere Rippen (12) vorgesehen. Das zweite Heizplattenelement (20) verfügt über Ausnehmungen (21), die in kongruenter Weise zu der Anordnung der Rippen (12) des ersten Heizplattenelementes (10) angeordnet sind und dadurch die Möglichkeit eröffnet, zwischen den Rippen (12) wenigstens teilweise in die Hohlräume, Kanäle (2) versenkt werden zu können.

Zu diesem Zweck sind die Stege (11) in axialer Richtung der Heizplatte (1) weniger hoch ausgebildet als die vorzugsweise bündig zur Heizplattenoberfläche abschließenden Rippen (12). Dadurch ist es möglich, sowohl die strömungsbeeinflussenden Luftspalte (5) und gleichsam die ggf. vorhandenen axialen Druckbelastungen auf die Heizplatte (1) ausschließlich durch die Rippen (12) aufzufangen bzw. nur diese zu belasten.

Die Auflageflächen des zweiten Heizplattenelementes (20) auf dem ersten Heizplattenelement (10) an den Schweißstellen (3) können derart ausgebildet sein, dass zwischen den Stegen (11) und dem zweiten Heizplättenelement (20) auf die Höhe des Luftspaltes (5) Einfluss genommen wird.

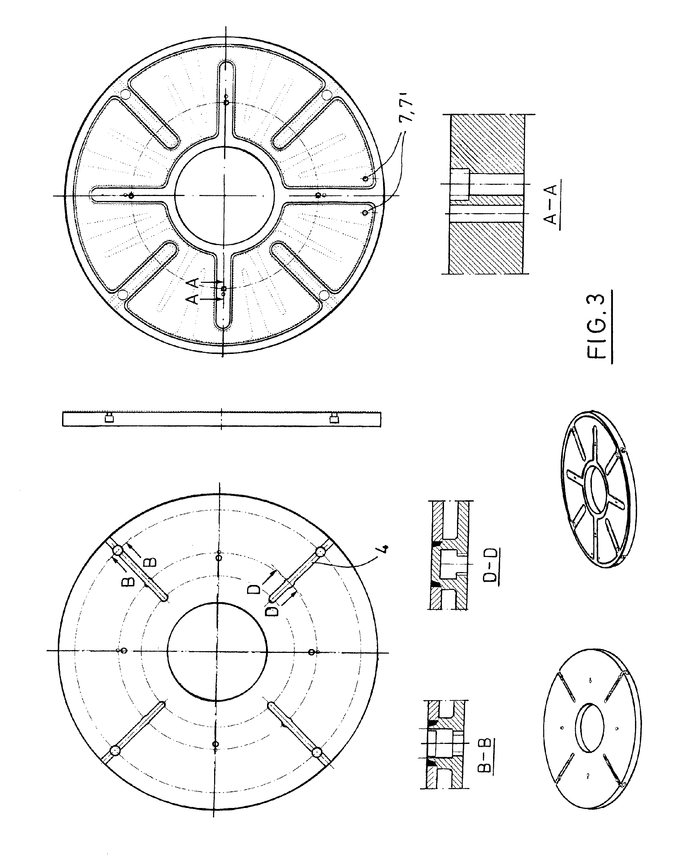

Figur 3 zeigt eine Darstellung der erfindungsgemäßen Heizplatte (1) in einer Ausführungsvariante mit heizflächenseitigen Führungen (4) in drei Ansichten und Schnittdarstellungen. Die Führungen (4) sind bevorzugt im Bereich der Rippen (12) vorgesehen, um mechanische Belastungen, insbesondere Zug-/Druckbeanspruchungen nicht über die Fügestellen bzw. Schweißnähte (3) zu leiten sondern nur in das erste Heizplattenelement (10). Durch die Reduzierung der mechanischen Belastungen auf die Fügestellen ist das Risiko eines Schweißnahtversagens und damit einhergehender möglicher Undichtigkeit verringert.

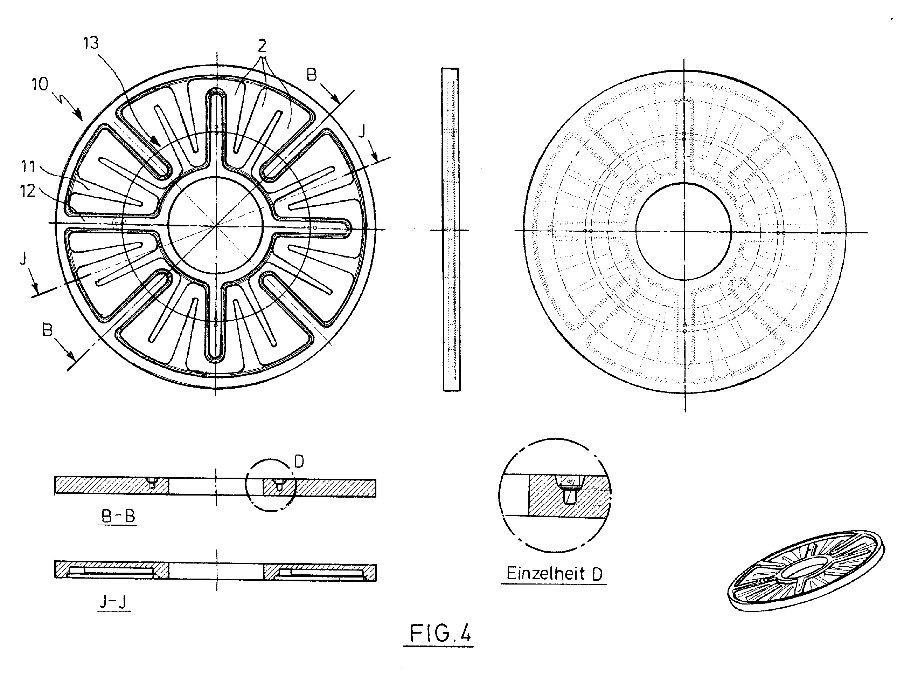

Figur 4 zeigt eine Darstellung des erfindungsgemäßen ersten Heizelementes (10) in drei Ansichten und Schnittdarstellungen sowie einer dreidimensionalen Abbildung. Die Kanalausbildung der Hohlräume (2) wird durch Stege (11) realisiert. Die Hohlräume (2) werden durch axiale Materialwegnahme, beispielsweise durch Ausbrennen, Wässerstrahlfräsen oder konventionelle Fräsverfahren mittels spanend arbeitender Fräswerkzeuge bewerkstelligt. Dabei wird die Materialwegnahme derart realisiert, dass Stege (11) und Rippen (12) herausgearbeitet werden und sich ein Kanalsystem herausbildet das geeignet ist, den Wärmeübergang von dem Heizmedium (6) auf die Heizplatte (1) durch die sich ergebende Oberflächenmaximierung zu optimieren. Auch können durch die Anordnung der Stege (11) und Rippen (12) turbulente Strömungssituationen in Abhängigkeit der vorliegenden Reynoldszahl herbeigeführt werden die geeignet sind, den Wärmeübergang von dem Heizmedium (6) auf die Heizplatte (1) Weiter zu verbessern.

Die Anordnung der der Stege (11) und Rippen (12) und damit die Kanalausprägung kann auch dazu genutzt werden, Zonen unterschiedlicher Temperatur abschnittsweise in die Heizplatte (1) zu induzieren, d.h. innerhalb der Heizplatte (1) einen Temperaturgradienten zu erzeugen. Die abgebildete kreisbogenförmige Mäandererstreckung (13) ist demgegenüber geeignet, durch die sich ergebende Ausbildung der ungleichen Kanalquerschnitte (2) eine Homogenisierung der Temperaturverteilung innerhalb der Heizplatte (1) zu unterstützen.

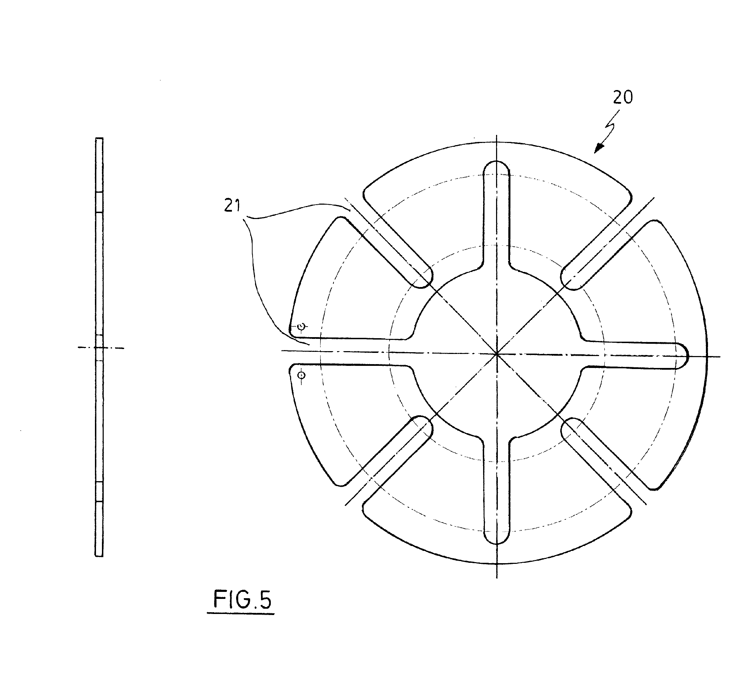

Figur 5 zeigt eine Darstellung des erfindungsgemäßen zweiten Heizelementes (20) in zwei Ansichten. Das zweite Heizplattenelement (20) verfügt über Ausnehmungen (21), die in kongruenter Weise zu der Anordnung der Rippen (12) des ersten Heizplattenelementes (10) angeordnet sind und dadurch die Möglichkeit eröffnen, zwischen den Rippen (12) wenigstens teilweise in die Hohlräume, Kanäle (2) versenkt werden zu können. Dadurch ist es möglich, dass Druckbelastungen auf die Heizplatte (1) ausschließlich durch die Rippen (12) aufgefangen bzw. nur diese belastet werden.

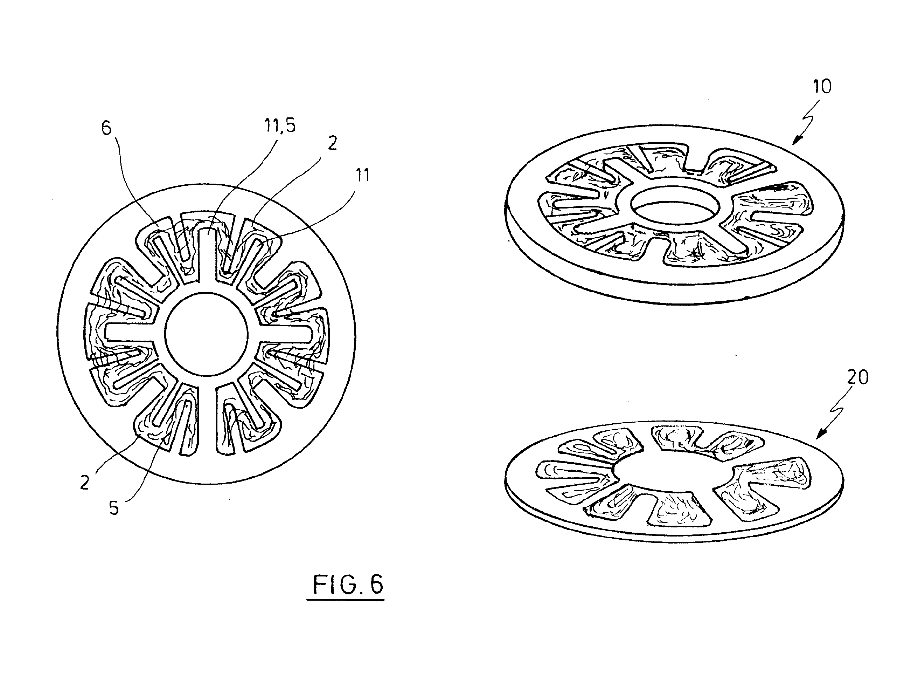

Figur 6 zeigt in der linken Abbildung die qualitative Darstellung der Strömungsgeschwindigkeiten des Heizmediums (6) innerhalb der Kanäle (2) und den Luftspalten (5) in der rechten Abbildung die dreidimensionale Darstellung von erstem Heizelement (10) und zweitem Heizelement (20). Infolge der Ausprägung der kreisförmigen Mäandererstreckung (13) und der Kanalverläufe (2) in Verbindung mit und ohne Luftspalte (5) der Stege (11) ergeben sich Strömungsgeschwindigkeitsgradienten des Heizmediums (6).

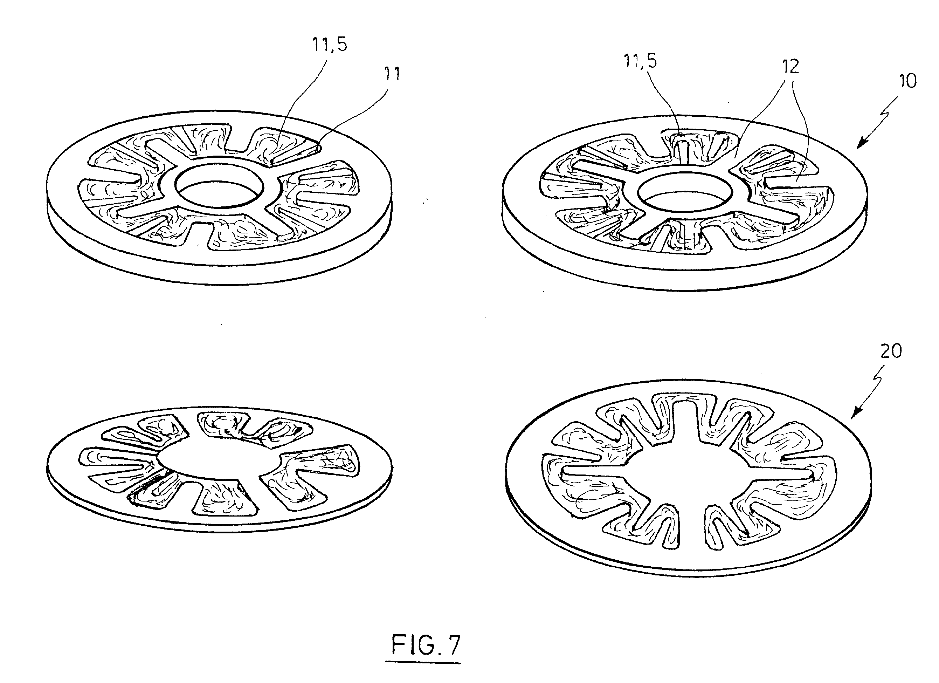

Figur 7 bildeteine perspektivische, qualitative Darstellung der Strömungsgeschwindigkeiten des Heizmediums (6) innerhalb der Kanäle (2) und den Luftspalten (5) des ersten Heizelementes (10) und des zweiten Heizelementes (20) mit Stegen (11) in alternierender und nichtalternierender Anordnung ab und erlaubt den qualitativen Vergleich beider Ausführungsvarianten auf die Strömungsgeschwindigkeiten des Heizmediums (6).

## Patentansprüche

1. Heizplatte (1) zur Beheizung einer Form für eine Reifenheizpresse, aufweisend ein erstes Heizplattenelement (10) und wenigstens ein zweites Heizplattenelement (20) sowie wenigstens einen Kanal (2) zur Durchströmung eines Heizmediums (6), **dadurch gekennzeichnet, dass** das erste Heizplattenelement (10) wenigstens einen geöffneten Hohlraum (2') aufweist, der durch wenigstens ein zweites Heizplattenelement (20) axial geschlossen ist, sodass wenigstens ein Kanal (2) gebildet ist.

2. Heizplatte (1) nach Anspruch 1, **dadurch gekennzeichnet, dass** der wenigstens eine Kanal (2) in radialer Richtung der Heizplatte (1) durch wenigstens eine Rippe (12) begrenzt ist.

3. Heizplatte (1) nach Anspruch 2, **dadurch gekennzeichnet, dass** das zweite Heizplattenelement (20) wenigstens eine Ausnehmung (21) aufweist, die in kongruenter Weise zu der Positionierung der wenigstens einen Rippe (12) des ersten Heizplattenelementes (10) ausgestaltet ist sodass das zweite Heizplattenelement (20) zwischen den Rippen (12) des ersten Heizplattenelementes (10) teilweise in die Hohlräume (2) versenkbar ist.

4. Heizplatte (1) nach einem der vorgehenden Ansprüche, **dadurch gekennzeichnet, dass** sich der wenigstens eine Kanal (2) innerhalb der Heizplatte (1) labyrinthförmig erstreckt.

5. Heizplatte (1) nach einem der Ansprüche 1 bis 3, **dadurch gekennzeichnet, dass** sich der wenigstens eine Kanal (2) innerhalb der Heizplatte (1) mäanderförmig erstreckt.

6. Heizplatte (1) nach Anspruch 5, **dadurch gekennzeichnet, dass** sich der wenigstens eine mäanderförmige Kanal (2) innerhalb der Heizplatte (1) linear oder kreisbogenförmig (13) erstreckt.

7. Heizplatte (1) nach einem der vorgehenden Ansprüche, **dadurch gekennzeichnet, dass** die Querschnittsfläche des wenigstens einen Kanals (2) im Verlauf seiner Erstreckung innerhalb der Heizplatte (1) ungleich konstant ist.

8. Heizplatte (1) nach einem der vorgehenden Ansprüche, **dadurch gekennzeichnet, dass** wenigstens ein Steg (11) innerhalb des wenigstens einen Kanals (2) derart angeordnet ist, dass sich die Strömungsgeschwindigkeit und, oder die Strömungsrichtung des Heizmediums (6) ändert.

9. Heizplatte (1) nach Anspruch 8, **dadurch gekennzeichnet, dass** der wenigstens eine Steg (11) innerhalb des wenigstens einen Kanals (2) derart angeordnet ist, dass sich eine turbulente Strömung des Heizmediums (6) ausbildet.

10. Heizplatte (1) nach Anspruch 8, **dadurch gekennzeichnet, dass** der wenigstens eine Steg (11) keilförmig ausgebildet ist.

11. Heizplatte (1) nach Anspruch 10, **dadurch gekennzeichnet, dass** der wenigstens eine Steg (11) in einer radialen Ausrichtung derart angeordnet ist, dass die Materialanhäufung des Keilfußes im äußeren Bereich der Heizplatte (1) angeordnet ist, sodass die damit einhergehende höheren Wärmespeicherkapazität dem im äußeren Bereich der Heizplatte (1) vorliegenden erhöhten Wärmeverlust infolge Konvektion entgegenwirkt.

12. Heizplatte (1) nach Anspruch 8, **dadurch gekennzeichnet, dass** eine Mehrzahl von Stegen (11) vorgesehen ist, wobei die Stege (11) an dem ersten und, oder an dem zweiten Heizplattenelement (10, 20) festgelegt sind.

13. Heizplatte (1) nach Anspruch 12, **dadurch gekennzeichnet, dass** die Stege (11) an dem ersten und zweiten Heizplattenelement (10, 20) alternierend festgelegt sind.

14. Heizplatte (1) nach Anspruch 8, **dadurch gekennzeichnet, dass** der wenigstens eine Steg (11) derart gestaltet ist, dass zwischen dem Steg (11) und einem der Heizplattenelemente (10, 20) ein Luftspalt (5) ausgebildet ist.

15. Heizplatte (1) nach Anspruch 14, **dadurch gekennzeichnet, dass** die Höhe des Luftspaltes (5) 5 bis 30 % der Höhe des Steges (11) entspricht.

16. Heizplatte (1) nach einem der vorgehenden Ansprüche, **dadurch gekennzeichnet, dass** der wenigstens eine Kanal (2) druckdicht ausgestaltet ist, sodass ein Heizmedium (6) druckbeaufschlagt zwischen wenigstens einem ersten und einem zweiten Anschluss (7, 7') strömen kann.

17. Heizplatte (1) nach einem der vorgehenden Ansprüche, **dadurch gekennzeichnet, dass** der wenigstens eine Kanal (2) zur Durchströmung eines Heizmediums (6) in Form von Heißdampf, Thermooel oder Heißwasser geeignet ist.

18. Verfahren zur Herstellung einer Heizplatte (1) nach einem der Ansprüche 1 bis 17, aufweisend die Verfahrensschritte
i. Einbringen von wenigstens einem in axialer Richtung offenen Hohlraum (2') in ein erstes Heizplattenelement (10),
ii. Verschließen des wenigstens einen offenen Hohlraums (2') axialseitig durch wenigstens ein zweites Heizplattenelement (20),
sodass wenigstens ein Kanal (2) innerhalb der Heizplatte (1) gebildet ist, in dem ein Heizmedium (6) strömen kann.
